# EUROPEAN PATENT SPECIFICATION

(11) **EP 2 389 460 B1**
(45) Date of publication and mention of the grant of the patent: **14.09.2016**
(21) Application number: 10704116.2
(22) Date of filing: 18.01.2010
(51) Int. Cl.: C25B 15/00, C25B 1/04, F02M 25/12

(54) **ELECTROLYSIS METHOD, DEVICE AND SYSTEM**
ELEKTROLYSEVERFAHREN, -VORRICHTUNG UND -SYSTEM
PROCÉDÉ, DISPOSITIF ET SYSTÈME D'ÉLECTROLYSE

(30) Priority: 20.01.2009 BE 200900033
(43) Date of publication of application: 30.11.2011
(73) Proprietor: Palmir, 2160 Wommelgem (BE)
(72) Inventor: VERDAASDONK, Paul, B-2160 Wommelgem (BE); VAN DEN BRANDE, Peter, B-2160 Wommelgem (BE)
(74) Representative: Mackett, Margaret
(86) International application number: PCT/EP2010/050538
(87) International publication number: WO 2010/084102

(56) References cited:
- WO-A-2008/063967
- DE-A1-102007 051 230
- JP-A- 2001 295 087
- DATABASE WPI Week 200281 Thomson Scientific, London, GB; AN 2002-742075 XP002541788 & CN 1 363 726 A (UNIV QINGHUA) 14 August 2002 (2002-08-14)

## Description

This invention concerns an electrolysis method, , an electrolysis device and a system for use of electrolysis gases for combustion, in particular for combustion engines, for example piston or turbine engines.

It has been known for sometime to obtain hydrogen and oxygen or a stoichiometric mixture thereof (referred to below as Brown's gas or detonating gas) from water by electrolysis. It has also been proposed for sometime to use electricity from renewable energy sources in this electrolysis in order thus to be able to use the hydrogen obtained by electrolysis as a renewable fuel. So far these proposals have had limited success, mainly due to the low efficiency of existing electrolysis devices.

In the Chinese patent application CN 1 363 726 A, it has been proposed, in order to increase the efficiency of an electrolysis method for separation of a gas from a liquid electrolyte over at least one electrolysis electrode under electric voltage, to artificially vibrate said electrolysis electrode with a vibration frequency.

The gas bubbles forming on the surface of the electrolysis electrode escape more quickly under this artificial vibration. The effective surface of the electrode is thus not reduced too greatly by the gas bubbles, and an optimum electron exchange can be maintained between the surface of the electrode and the liquid electrolyte.

The aim of the present invention is to further increase said efficiency. According to at least an embodiment of the present invention, this is achieved in that said electrical voltage of the electrolysis electrode oscillates with a lower harmonic frequency of said resonance frequency.

The harmonic oscillation of the electrode voltage interacts with the vibration to further increase the electrolysis efficiency. The vibration also appears to have an effect on the liquid molecules themselves and unexpectedly increases the efficiency of-the electrolysis by collision between the molecules.

Preferably said electrolysis electrode is vibrated at a resonance frequency. As a result the two effects are amplified further and the efficiency of the electrolysis is even higher.

Preferably said liquid electrolyte contains water so that said separated gas is a combustible hydrogen-containing gas. As a result an effective fuel can be obtained from water with high efficiency.

Preferably the combustible hydrogen-containing gas is burned and the hot exhaust gasses resulting from this combustion preheat the liquid water and/or combustible hydrogen-containing gas. By this use of regenerative heat, the efficiency of both the electrolysis and the combustion can be increased.

The present invention also relates to an electrolysis device comprising:
a) said electrolysis vessel with at least one pair of substantially similar electrodes each comprising an electrically conductive material with an electrical contact for connection to an electrolysis circuit, and a piezo element with two electrical contacts for connection to a separate vibration circuit,
b) an electrolysis circuit connected to said electrodes, wherein each of the two electrodes of an electrode pair is connected to the circuit with inverse polarity, and
c) a vibration circuit connected to said piezo elements,
wherein said vibration circuit has a regulator to control the output voltage with a vibration frequency and said electrolysis circuit is also connected to said regulator in order to control the output voltage of the electrolysis circuit with a lower harmonic frequency of said vibration frequency.

Preferably said regulator may be a pulse width regulator.

Preferably said vibration frequency may be a resonance frequency.

Preferably said electrolysis device is fitted with an electricity supply from renewable energy sources in order thus to reduce the consumption of fossil fuels and the associated greenhouse effect.

The present invention also relates to a combustion system containing said electrolysis device, a combustion device and a gas line between the electrolysis device and the combustion device for feeding a combustible electrolysis gas to the combustion device. As a result electricity in some circumstances can be converted into thermal energy in a useful manner.

Preferably said gas line contains a safety bubbler. This prevents a flash-back from the combustion device from damaging the electrolysis vessel.

Preferably said gas line also contains a non-return valve connected before the safety bubbler. This prevents, in the case of a negative pressure in the electrolysis vessel, fluid from being drawn back to the electrolysis vessel from the safety bubbler.

Preferably the combustion system also has an electrolysis gas storage tank connected to said gas line. As a result electrolysis gas can be stored in order to be used during high loads on the combustion device.

Preferably the combustion system also has an exhaust line connected to the combustion system with at least one heat exchanger connected to the gas line and/or electrolysis tank. As a result the combustible electrolysis gas and/or electrolysis vessel can be preheated regeneratively by the combustion gasses.

Preferably said combustion device is a combustion engine, preferably a piston or turbine engine. As a result under some circumstances electricity can be converted into mechanical energy in a useful manner.

Details relating to the invention are described below with reference to the following figures.
Figure 1 is a diagram of an electrolysis electrode according to one embodiment of the invention.
Figure 2 is a diagrammatic depiction of an electrolysis device according to one embodiment of the invention with a pair of electrolysis electrodes such as those in figure 1.
Figure 3 is a diagrammatic depiction of a combustion system according to an embodiment of the invention including an electrolysis device such as that in figure 1 and a combustion engine.

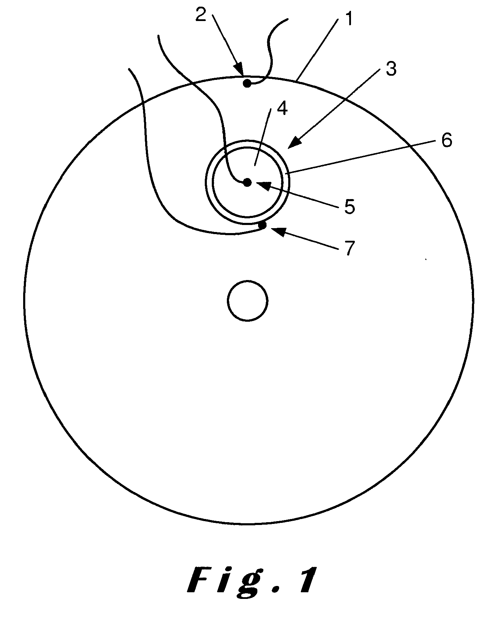

The electrolysis electrode 1 shown in figure 1 is a thin platelike electrode of stainless steel with an electrical contact 2 and a piezo element 3 attached to the surface of the electrode by means of an isolating adhesive. This piezo element 3 contains a piezo-electric ceramic disc 4 with a first centrally located electrical contact 5 and an outer ring 6 of brass around the ceramic disc 4, with a second electrical contact 7. It is therefore possible to provoke a vibration of the piezo element 3 with an alternating voltage between the contacts 5 and 7, which vibration acts on the entire electrode 1, in particular if the frequency of the voltage is a resonance frequency of the electrode.

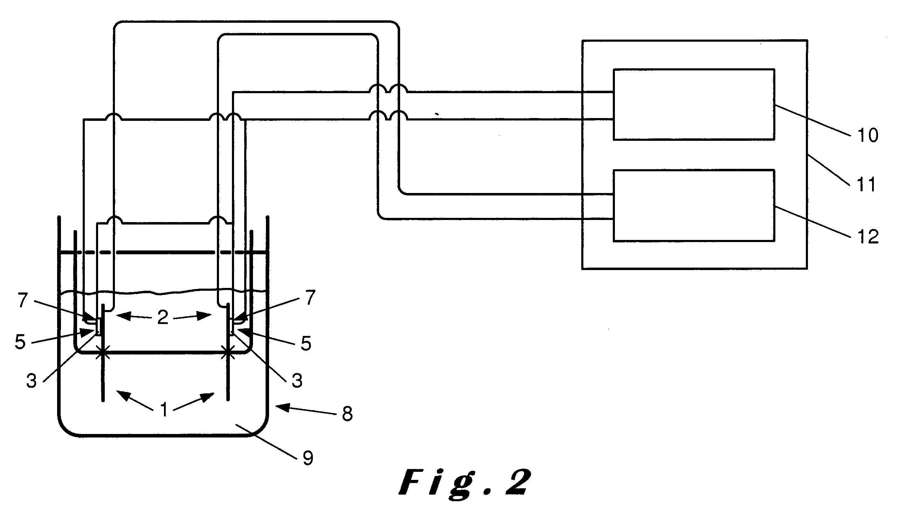

In the electrolysis device shown in figure 2, a closed electrolysis vessel 8 containing a liquid electrolyte 9, in this case salt water, has one or more pairs of essentially similar electrodes 1 of the type shown in figure 1. Each electrode 1 is therefore fitted with a piezo element 3 attached thereto.

Contacts 5 and 7 of the piezo element 3 are connected via a chemically resistant cable to a vibration circuit 10 in a control module 11 in order to activate said piezo element 3 with a resonance frequency. In a preferred embodiment of the invention, this vibration circuit 10 contains a crystal to set the frequency, a PLL circuit to maintain an optimum resonance frequency without manual adjustment, and a self-induction coil to drive the pulsating output voltage.

The contacts 2 of the electrodes 1 are in turn connected to an electrolysis circuit 12 of the control module 11. The electrolysis circuit 12 is itself connected to the vibration circuit 10 in order to apply a pulse width regulated voltage between the electrodes 1 of each electrode pair, wherein the frequency of this pulse width regulated voltage is a lower harmonic frequency synchronised with the resonance frequency of the vibration circuit.

In use, via the piezo element 3, the resonance frequency on the electrodes 1 is set such that via these electrodes 1 the frequency is transmitted to the water molecules. The electrolysis of the water is supported by application of the pulse width regulated voltage to the electrodes 1.

Table 1 shows the parameters of a tested example of this electrolysis device with disc-like electrodes of 130 mm diameter and 1 mm thickness:

**Table 1: Electrolysis parameters**

| Vibration circuit 10 | | Electrolysis circuit 11 | |
|---|---|---|---|
| Frequency [MHz] | Output voltage [V] | Frequency [kHz] | Output voltage [V] |
| 2.24 | 70-120 | 22.4 | 2.2 |

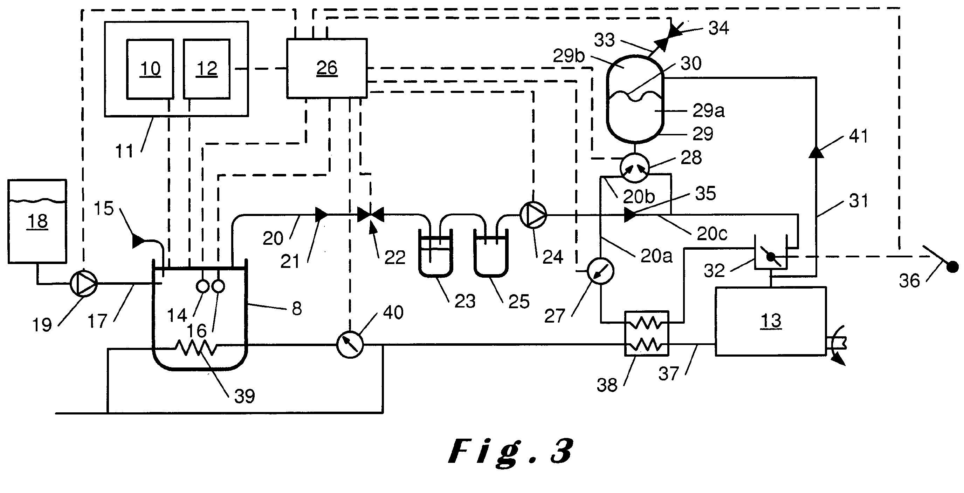

Figure 3 shows a combustion system where the electrolysis gas processed in the electrolysis vessel 8 can be used as fuel for a combustion device, in this case a combustion engine 13. The electrolysis vessel 8 of this embodiment of the invention also contains for safety reasons a pressure sensor 14, an over-pressure valve 15, and an electrolyte level sensor 16. The pressure sensor 14 monitors the internal pressure of the electrolysis vessel 8 and is connected with the control module 12 via a motor control module 26 in order to disable the electrolysis if the internal pressure becomes too high. The over-pressure valve 15 is also set to prevent the internal pressure from rising above a dangerous level. The electrolyte level sensor 16 is also connected with the motor control module 26 in order to activate the supply of electrolyte via a supply line 17 if the electrolyte level falls below a specific level. This supply line 17 can as shown connect the electrolysis vessel 8 with an electrolyte tank 18 and have a pump 19 connected with the control module 26, and a non-return valve so that in use the electrolyte level in the electrolysis vessel 8 remains above the electrodes 1.

The electrolysis vessel 8 is connected with the combustion engine 13 via a gas line 20 so that the electrolysis gas can be supplied to the combustion engine 13. Connected to the gas line 20 are a non-return valve 21, an electronically controlled valve 22, a safety bubbler 23 and a vacuum pump 24 driven by a carbon-brush-free motor, and a water separator 25. The safety bubbler 23 is included to retain any flash-back from combustion so that the electrolysis vessel 8 cannot be damaged. The motor of the vacuum pump 24 is also connected with the motor control module 26 so that its rotation speed can be regulated by the motor control module 26. Downstream of water separator 25, the gas line 20 branches into three lines 20a, 20b and 20c. In line 20a, a control valve 27 is connected with the motor control module 26 to regulate the gas flow through this gas line 20a. Line 20b contains a three-way valve 28 also connected with motor control module 26 and a gas storage tank 29. This gas storage tank 29 is split by an elastic diaphragm 30 into a gas part 29a connected with a three-way valve 28 and a vacuum part 29b connected via a reduced pressure line 31 with the inlet 32 of engine 13, and also fitted with an air inlet 33 regulated by motor control module 26 via a solenoid valve 34. The reduced pressure line 31 is fitted with a one-way valve 41. Line 20c with a one-way valve 35 bridges line 20b. The three lines 20a, 20b and 20c open into the inlet 32 of engine 13, where the air and fuel supply is regulated by a gas pedal 36 also connected with the motor control module 26. The engine exhaust 37 passes over two heat exchangers 38, 39. The first heat exchanger 38 is connected with line 20a to preheat the combustible electrolysis gas. The second heat exchanger 39, regulated by the control valve 40 controlled by the motor control module 26, preheats the electrolysis vessel 8.

In use, the combustible electrolysis gas produced in the electrolysis vessel 8 is brought via line 20 and non-return valve 21 and electrical solenoid valve 22 into the safety bubbler 23. The combustible electrolysis gas is pumped out of the safety bubbler 23 by the vacuum pump 24. The combustible electrolysis gas then passes through the water separator 25 to separate out any water droplets which are carried into the gas line 20 (car judder or similar) before the combustible electrolysis gas enters the engine 13. Via lines 20a and 20b respectively, the combustible electrolysis gas is sent to the motorised control valve 27 and the electrically controlled three-way valve 28. These valves are controlled by the motor control module 26 according to the load on the engine 13. Downstream of valve 27, the combustible electrolysis gas is preheated by heat exchanger 38 before being supplied to the engine 13. The bridging of line 20b is active at a constant engine load. The combustible electrolysis gas is then supplied to the engine 13 via the line 20c.

When acceleration is required from the engine 13, the three-way valve 28 switches over in order to be able to pass a flow of combustible electrolysis gas from the gas storage tank 29 to the engine 13 via line 20b. The gas storage tank 29 is automatically quickly refilled when the engine 13 performs a speed reduction, and because of the vacuum created in the inlet 32, the diaphragm 30 is drawn via the reduced pressure line 31 so that the gas storage tank 29 takes in a small quantity of combustible electrolysis gas which the engine 13 does not require on deceleration.

The invention is not restricted to the examples outlined above and changes are possible insofar as these fall within the framework of the claims below. For example, although in the illustrated embodiment the piezo elements are attached to the electrodes using an insulating adhesive, a conductive adhesive may also be alternatively used. For these reasons the description and drawing of the present application serve simply and solely as illustrations.

## Claims

1. Electrolysis method for separation of electrolysis gasses from a liquid electrolyte via at least one electrolysis electrode under electrical voltage, **characterised in that** said electrolysis electrode is vibrated artificially with a vibration frequency and said electric voltage of the electrolysis electrode oscillates with a lower harmonic frequency of said vibration frequency.

2. Electrolysis method according to claim 1, wherein said vibration frequency is a resonance frequency.

3. Electrolysis method according to one of claims 1 or 2, wherein said liquid electrolyte contains water so that said separated electrolysis gasses contain a combustible hydrogen-containing gas.

4. Electrolysis method according to claim 3, wherein the combustible hydrogen-containing gas is burned and the hot exhaust gasses resulting from this combustion preheat the liquid water and/or the combustible hydrogen-containing gas.

5. Electrolysis device comprising:
a) an electrolysis vessel with at least one pair of substantially similar electrodes each comprising an electrically conductive material with an electrical contact for connection to an electrolysis circuit, and a piezo element with two electrical contacts for connection to a separate vibration circuit,
b) an electrolysis circuit connected to said electrodes, wherein each of the two electrodes of an electrode pair is connected to the circuit with inverse polarity, and
c) a vibration circuit connected to said piezo elements, and
**characterised in that** said vibration circuit has a regulator to control the output voltage with a vibration frequency and said electrolysis circuit is also connected to said regulator in order to control the output voltage of the electrolysis circuit with a lower harmonic frequency of said vibration frequency.

6. Electrolysis device according to claim 5, wherein said regulator is a pulse width regulator.

7. Electrolysis device according to one of claims 5 or 6, wherein said vibration frequency is a resonance frequency of the electrodes.

8. Electrolysis device according to one of claims 5 to 7, with an electricity supply from a renewable energy source.

9. Combustion system comprising an electrolysis device according to any of claims 5 to 8, a combustion device and a gas line between the electrolysis device and the combustion device to supply the combustion device with a combustible electrolysis gas.

10. Combustion system according to claim 9, wherein said gas line comprises a safety bubbler.

11. Combustion system according to claim 10, wherein said gas line also contains a non-return valve connected before the safety bubbler.

12. Combustion system according to any of claims 8 to 11, with an electrolysis gas storage tank also connected to said gas line.

13. Combustion system according to any of claims 8 to 12, with an exhaust pipe also connected to the combustion device with at least one heat exchanger connected to the gas line and/or electrolysis tank.

14. Combustion system according to any of claims 8 to 13, wherein said combustion device is a combustion engine.

## Patentansprüche

1. Elektrolyseverfahren zum Trennen von Elektrolysegasen von einem flüssigen Elektrolyten mittels mindestens einer Elektrolyseelektrode unter elektrischer Spannung, **dadurch gekennzeichnet, dass** die Elektrolyseelektrode künstlich mit einer Vibrationsfrequenz vibriert wird und die elektrische Spannung der Elektrolyseelektrode mit einer niedrigeren harmonischen Frequenz der Vibrationsfrequenz oszilliert.

2. Elektrolyseverfahren nach Anspruch 1, wobei die Vibrationsfrequenz eine Resonanzfrequenz ist.

3. Elektrolyseverfahren nach einem der Ansprüche 1 oder 2, wobei der flüssige Elektrolyt Wasser enthält, so dass die abgetrennten Elektrolysegase ein brennbares wasserstoffhaltiges Gas enthalten.

4. Elektrolyseverfahren nach Anspruch 3, wobei das brennbare wasserstoffhaltige Gas verbrannt wird und die aus dieser Verbrennung resultierenden heißen Abgase das flüssige Wasser und/oder das brennbare wasserstoffhaltige Gas vorheizen.

5. Elektrolysevorrichtung, umfassend:
a) ein Elektrolysegefäß mit mindestens einem Paar im Wesentlichen ähnlicher Elektroden, die jeweils ein elektrisch leitendes Material mit einem elektrischen Kontakt zum Anschluss an eine Elektrolyseschaltung und ein Piezoelement mit zwei elektrischen Kontakten zum Anschluss an eine separate Vibrationsschaltung umfassen,
b) eine Elektrolyseschaltung, die an die Elektroden angeschlossen ist, wobei jede der beiden Elektroden eines Elektrodenpaars mit umgekehrter Polarität an die Schaltung angeschlossen ist, und
c) eine Vibrationsschaltung, die an die Piezoelemente angeschlossen ist, und
**dadurch gekennzeichnet, dass** die Vibrationsschaltung einen Regler zur Steuerung der Ausgangsspannung mit einer Vibrationsfrequenz aufweist und die Elektrolyseschaltung ebenfalls an den Regler angeschlossen ist, um die Ausgangsspannung der Elektrolyseschaltung mit einer niedrigeren harmonischen Frequenz der Vibrationsfrequenz zu steuern.

6. Elektrolysevorrichtung nach Anspruch 5, wobei der Regler ein Pulsbreitenregler ist.

7. Elektrolysevorrichtung nach einem der Ansprüche 5 oder 6, wobei die Vibrationsfrequenz eine Resonanzfrequenz der Elektroden ist.

8. Elektrolysevorrichtung nach einem der Ansprüche 5 bis 7 mit einer Elektrizitätsversorgung aus einer erneuerbaren Energiequelle.

9. Verbrennungssystem, umfassend eine Elektrolysevorrichtung nach einem der Ansprüche 5 bis 8, eine Verbrennungsvorrichtung und eine Gasleitung zwischen der Elektrolysevorrichtung und der Verbrennungsvorrichtung, um die Verbrennungsvorrichtung mit einem brennbaren Elektrolysegas zu versorgen.

10. Verbrennungssystem nach Anspruch 9, wobei die Gasleitung einen Sicherheitsbubbler umfasst.

11. Verbrennungssystem nach Anspruch 10, wobei die Gasleitung auch ein Rückschlagventil enthält, das vor dem Sicherheitsbubbler angeschlossen ist.

12. Verbrennungssystem nach einem der Ansprüche 8 bis 11 mit einem Elektrolysegaslagerungstank, der ebenfalls an die Gasleitung angeschlossen ist.

13. Verbrennungssystem nach einem der Ansprüche 8 bis 12, wobei eine Abgasleitung ebenfalls an die Verbrennungsvorrichtung angeschlossen ist, wobei mindestens ein Wärmetauscher an die Gasleitung und/oder den Elektrolysetank angeschlossen ist.

14. Verbrennungssystem nach einem der Ansprüche 8 bis 13, wobei die Verbrennungsvorrichtung ein Verbrennungsmotor ist.

## Revendications

1. Procédé d'électrolyse pour séparation de gaz d'électrolyse d'un électrolyte liquide via au moins une électrode d'électrolyse sous tension électrique, **caractérisé en ce que** ladite électrode d'électrolyse est amenée à vibrer artificiellement avec une fréquence de vibration et ladite tension électrique de l'électrode d'électrolyse oscille avec une fréquence harmonique inférieure de ladite fréquence de vibration.

2. Procédé d'électrolyse selon la revendication 1, dans lequel ladite fréquence de vibration est une fréquence de résonance.

3. Procédé d'électrolyse selon l'une des revendications 1 ou 2, dans lequel ledit électrolyte liquide contient de l'eau de sorte que lesdits gaz d'électrolyse séparés contiennent un gaz combustible contenant de l'hydrogène.

4. Procédé d'électrolyse selon la revendication 3, dans lequel le gaz combustible contenant de l'hydrogène est brûlé et les gaz d'échappement chauds provenant de cette combustion préchauffent l'eau liquide et/ou le gaz combustible contenant de l'hydrogène.

5. Dispositif d'électrolyse comprenant :
a) un récipient d'électrolyse avec au moins une paire d'électrodes sensiblement similaires comprenant chacune un matériau électriquement conducteur avec un contact électrique pour connexion à un circuit d'électrolyse, et un élément piézo avec deux contacts électriques pour connexion à un circuit de vibration distinct,
b) un circuit d'électrolyse connecté auxdites électrodes, chacune des deux électrodes d'une paire d'électrodes étant connectée au circuit avec une polarité inverse, et
c) un circuit de vibration connecté auxdits éléments piézos, et
**caractérisé en ce que** ledit circuit de vibration possède un régulateur pour contrôler la tension de sortie avec une fréquence de vibration et ledit circuit d'électrolyse est également connecté audit régulateur afin de contrôler la tension de sortie du circuit d'électrolyse avec une fréquence harmonique inférieure de ladite fréquence de vibration.

6. Dispositif d'électrolyse selon la revendication 5, dans lequel ledit régulateur est un régulateur de largeur d'impulsion.

7. Dispositif d'électrolyse selon l'une des revendications 5 ou 6, dans lequel ladite fréquence de vibration est une fréquence de résonance des électrodes.

8. Dispositif d'électrolyse selon l'une des revendications 5 à 7, avec une alimentation en électricité provenant d'une source d'énergie renouvelable.

9. Système de combustion comprenant un dispositif d'électrolyse selon l'une quelconque des revendications 5 à 8, un dispositif de combustion et une conduite de gaz entre le dispositif d'électrolyse et le dispositif de combustion pour alimenter le dispositif de combustion avec un gaz d'électrolyse combustible.

10. Système de combustion selon la revendication 9, dans lequel ladite conduite de gaz comprend un barboteur de sécurité.

11. Système de combustion selon la revendication 10, dans lequel ladite conduite de gaz contient également un clapet anti-retour raccordé avant le barboteur de sécurité.

12. Système de combustion selon l'une quelconque des revendications 8 à 11, avec un réservoir de stockage de gaz d'électrolyse également raccordé à ladite conduite de gaz.

13. Système de combustion selon l'une quelconque des revendications 8 à 12, avec un tuyau d'échappement également raccordé au dispositif de combustion avec au moins un échangeur de chaleur raccordé à la conduite de gaz et/ou au réservoir d'électrolyse.

14. Dispositif de combustion selon l'une quelconque des revendications 8 à 13, dans lequel ledit dispositif de combustion est un moteur à combustion.
